# EUROPEAN PATENT APPLICATION

(11) **EP 1 944 578 A2**
(43) Date of publication of application: **16.07.2008**
(21) Application number: 08000167.0
(22) Date of filing: 07.01.2008
(51) Int. Cl.: G01C 21/36, G06Q 10/00

(54) **Method for calculating a route to a destination for a navigation system**

(30) Priority: 11.01.2007 EP 07000543
(71) Applicant: Harman Becker Automotive Systems GmbH, 76307 Karlsbad (DE)
(72) Inventor: Bauer, Lee, Grosse Pointe Farms, MI 48236 (US)
(74) Representative: Bertsch, Florian Oliver

(57) **Abstract**

A method for calculating a route to a destination for a navigation system of a vehicle is provided. The method comprises the steps of setting up a communication connection between the navigation system (2) and a remote information system (4), and calculating a route to the destination, wherein for calculating the route to the destination information (20) concerning the route is requested from the information system (4), and the route is determined based on the requested information (20).

## Description

The present invention relates to a method and a system for calculating a route to a destination for a navigation system, especially for a navigation system of a vehicle.

### Related Art

Navigation systems, especially navigation systems of a vehicle, help the driver of a vehicle to reach a destination predetermined by the driver. To avoid guiding the driver into congestion or the like, current navigation systems receive information concerning congestions via a traffic message channel (TMC). With the help of the information of the TMC, the navigation system searches for a route circumnavigating the congestion to guide the driver of the vehicle to the predetermined destination. Nevertheless, by taking into account more information and parameters concerning a route to a destination, an improved calculation of a route resulting in an improved guidance to a destination could be achieved. Furthermore, a driver of a vehicle may wish to have access to schedule and address information for setting new destinations and planning the day, especially also when using a rented car during travelling.

### Summary

Therefore, there is a need to provide an improved method and system for calculating a route to a destination for a navigation system, providing a more accurate estimation of the arrival time at the destination and avoiding congestions and delays, and a need for a navigation system providing access to schedule and address information of the driver.

According to the present invention, this need is met by a method for calculating a route to a destination for a navigation system of a vehicle as defined in claim 1 and a system for calculating a route to a destination as defined in claim 18. The dependent claims define preferred and advantageous embodiments of the invention.

According to an aspect of the present invention, a method for calculating a route to a destination for a navigation system of a vehicle is provided. According to this method, a communication connection between a navigation system and an information system is set up. Then, a route to a destination is calculated, wherein information concerning the route is requested from the information system for calculating the route to the destination. The route is determined based on the requested information. According to an embodiment of this method, the destination is set in the navigation system, the current position of the navigation system is determined by the navigation system, and a route from the current position to the destination is calculated by the navigation system.

Preferably, the setting up of the communication connection is initiated by the navigation system and the information concerning the route is requested by sending a request from the navigation system to the information system and by receiving an answer in response to the request.

The above-described method allows taking into account much more information for calculating a route to a destination than in currently used methods. By setting up a communication connection to an information system providing dedicated information concerning the route currently considered by the navigation system allows to provide very detailed information to the navigation system concerning the route and improves therefore the calculated results.

According to another embodiment of the present invention, the method further comprises an identifying of a user of the navigation system and a requesting of schedule information of the user from the information system. Then, after having determined the current time and date, a next appointment based on the current time and date and the schedule information is determined. On the basis of the information of the next appointment, address information of the next appointment is requested from the information system and the destination is set in the navigation system on the basis of the requested address information. With this method, once the user is identified, an automatic destination setting can be performed by retrieving via the information system schedule information of the user stored for example in a server connected to the internet. As the schedule and address information is retrieved from or via the information system, this method is particularly advantageous when used in vehicles used by several people, for example vehicles of a car rental.

The method may further comprise the steps of determining an estimated arrival time at the destination and comparing the estimated arrival time with a starting time of the next appointment. In case the estimated arrival time exceeds the starting time of the next appointment, a communication connection to a person related to the next appointment may be set up. The person related to the next appointment may be contacted by establishing a telephone connection between the user of the navigation system and the person related to the next appointment, or a data communication connection to a schedule database of the person related to the next appointment may be set up and a new starting time of the appointment may be negotiated and the schedule information may be updated according to the negotiation. By determining the estimated arrival time in advance and comparing it with the starting time of the next appointment, the involved persons can be informed well in advance and a rescheduling of the appointment can be arranged.

In another embodiment of the present invention, the request for information and the information response between the navigation system and the information system are coded according to a predetermined protocol. The predetermined protocol may comprise a short message service (SMS), a multimedia messaging service (MMS), an e-mail which may comprise special keywords, or a file containing data coded in an extensible mark up language (XML-file). Using the above-mentioned protocols enables a reliable and fast communication between the navigation system and the information system via various data communication networks providing different communication bandwidths.

The method may further comprise the step of requesting an acknowledgement from the user of the navigation system before setting the destination. As the navigation system is adapted to automatically set a destination in response to the schedule information retrieved from the information system, a user of the navigation system may wish to be informed about each change in setting the destination and may wish to control any changes in destination setting. For example, if a user of the navigation system has entered a new destination that does not match to the destination determined by analyzing the scheduling information of the user, the navigation system would propose to change the destination setting according to the information of the schedule information and then, the user can decide to drive either to the manually set destination or to drive to the destination according to the schedule information.

The information provided on the information system concerning the route may comprise a current traffic situation on the route, a construction site on the road, a traffic forecast for a section of the route for the estimated time the user of the navigation system will reach this section of the route, or a weather forecast for a section of the route for the estimated time when the user of the navigation system will reach this section of the route. The traffic forecast may be based on historical traffic information relating to the route, for example comprising congestions during rush hours or weekends, or may be based on event information relating to the route, for example concert events, cultural events and sports events. By taking into account these information, a route calculation can be performed much for precisely and a circumnavigation can be induced well in advance to find an optimum route to a destination at a certain point in time. Furthermore, an estimated arrival time can be calculated much more precisely.

According to another embodiment of the present invention, determining the route to the destination is based on driver operating characteristics. These driver operating characteristics may comprise a usual driving speed of the driver on different kinds of roads and break intervals the driver usually takes. Taking into account these driver operating characteristics furthermore increases the accuracy of the calculated route and the estimated arrival time. Information concerning the driver operating characteristics may be collected during driving and may be stored in the navigation system itself or in the information system. Storing these information in the navigation system reduces the required communication between the navigation system and the information system, and storing these information in the information system makes this information available in any car the user is using, for example also in rental cars.

According to another embodiment of the present invention, the method comprises furthermore that current traffic situations are collected during driving. These current traffic situations may comprise congestions or stop and go traffic in relation to a certain time of day or in relation to a certain day of the week. The collected current traffic situations may be stored in the navigation system or in the information system and thus built up historical traffic information from these current traffic situations. Therefore, the information system as well as the navigation system "learn" traffic information of a certain route in relation to certain times and these historical traffic information can then be used as described above to provide an improved routing to a destination.

In another embodiment of the present invention, the method comprises the steps of requesting image data of the destination from the information system and presenting the image data to a user of the navigation system. Thus, the user can select a destination by selecting one of the presented images from the image data. This is very helpful for a user of a navigation system looking for example for a restaurant or a hotel in a foreign city. In this example, the navigation system requests image data of restaurants and hotels near the destination from the information system and presents these image data to the user. The user selects one of the images and then the navigation system automatically sets the destination according to this selection.

Preferably, the information system comprises a server in a data communication network and the navigation system is adapted to connect to the data communication network via a wireless transmission. By arranging the information system as a server in a data communication network, a data exchange between the navigation system and the information system as well as a communication between a personal digital assistant or a personal computer of the user and the information system can be easily accomplished. This secures that the information on the information system concerning schedule information and traffic information is always up to date.

According to another aspect of the present invention, a system for calculating a route to a destination is provided. The system comprises a navigation system for calculating the route to the destination, an information system for providing information concerning the route to the destination, and a data communication network for providing a communication between the navigation system and the information system. The navigation system comprises a destination unit for storing the destination, a communication access unit providing a communication to the information system via the data communication network, and a processing unit calculating a route to the destination, requesting information concerning the route from the information system via the communication access unit and determining the route to the destination based on the requested information. The information system comprises a communication access unit providing a communication to the navigation system via the data communication network, a memory unit storing information concerning a route, and a processing unit receiving a request for information concerning a route from the navigation system, retrieving the requested information, and transmitting the retrieved information to the navigation system. Such a system is adapted to carry out the above-described method and allows therefore determining a route much more precisely as described above.

The navigation system may further comprise a positioning unit adapted to determine the current position of the navigation system. Furthermore, the processing unit of the navigation system may be adapted to calculate a route from the current position to the destination. In combination with the information retrieved from the information system, the navigation system is able to calculate the optimum route from the current position to the destination.

According to an embodiment, the memory unit of the information system is furthermore storing schedule information of a user of the navigation system. The navigation system comprises an authentication unit with which a user of the navigation system can be authenticated. The authentication may comprise an authentication by a fingerprint, an input of a user name and a password, or an authentication by a transponder the user is carrying. Furthermore, the navigation system may comprise a clock unit providing the current time and date. After the user has been identified by the authentication unit, the processing unit of the navigation system requests the schedule information of the user from the information system and determines the next appointment listed in the schedule information based on the current time and date information. Based on the next appointment, the processing unit of the navigation system requests an address information of the next appointment from the information system and sets the address information as the destination in the destination unit of the navigation system. Thus, an easy way of setting a destination in the navigation system is provided. If required, the navigation system may additionally request via a user interface of a navigation system an acknowledgement from the user of the navigation system before setting the new destination. This ensures that no unintended destination setting changes occur due to the automatic destination setting mechanism.

According to another embodiment of the present invention, the communication access unit of the navigation system is adapted to place a telephone call to a person related to the next appointment. The processing unit of the navigation system is adapted to determine an estimated arrival time at the destination. Then, the processing unit compares the estimated arrival time with a starting time of the next appointment and in case, the estimated arrival time exceeds the starting time of the next appointment, the processing unit controls the communication access unit to place a telephone call to a person related to the next appointment. Additionally or alternatively, the communication access unit of the navigation system may be adapted to set up a data communication connection to a schedule database of a person related to the next appointment and in case, the estimated arrival time exceeds the starting time of the next appointment, the processing unit of the navigation system negotiates a new starting time of the appointment and adapts the schedule information in accordance with the negotiation. A system like this allows a user of the navigation system to rearrange appointments that cannot be reached within time during travelling without being distracted from the traffic.

According to another embodiment of the invention, the communication access unit of the navigation system and the communication access unit of the information system are adapted to exchange information according to a predetermined protocol. The predetermined protocol may comprise a data exchange via a short message service (SMS), a multimedia messaging service (MMS), an e-mail or an XML file. Therefore, the information exchange can be easily accomplished by any popular communication means utilizing different kinds of data communication networks and are therefore adapted to be implemented on various platforms, for example desktop software like Microsoft Outlook, internet software on an internet site or portal or a personal information manager software on a mobile device.

The information concerning the route provided by the information system may comprise a current traffic situation on the route, construction sites on the route, a traffic forecast for the estimated time a user will drive along a route, and a weather forecast for the estimated time a user will drive along the route. The traffic forecast may be based on historical traffic information relating to the route, or event information like concert events, cultural events and sports events. The navigation system may be further adapted to determine the route based on driver operating characteristics, for example usual driving speed of the driver and break intervals of the driver. These driver operating characteristics may be also provided by the information system and requested by the navigation system from the information system, or may be stored in a memory unit of the navigation system. Taking into account the above-mentioned information for determining a route to a destination improves the determination of the route significantly and helps the driver to reach the destination in less time and adapted to the driver's operating characteristics.

The navigation system may further collect information concerning driver operating characteristics during driving and store the collected driver operating characteristics in a memory unit of the navigation system and/or the memory unit of the information system. Furthermore, the navigation system may collect current traffic situations during driving and store the collected information in the navigation system and/or the information system together with a time and location information to built up historical traffic information from the current traffic situation. Providing the historical traffic information on the information system enables other users of navigation systems to optimize a route to a destination taking into account this historical traffic information.

Finally, the processing unit of the navigation system may be adapted to request image data of the destination from the information system. These image data may then be presented via a user interface of the navigation system to the user and the user can set a destination in the destination unit based on a selection of one of the images from the image data. The image data may comprise points of interest, for example buildings, hotels, or restaurants, within a predetermined distance to the current destination. This enables the user of the navigation system to select and navigate to a desired point of interest or to plan a site seeing tour by selecting several points of interest.

### Brief Description of the Drawings

The invention will now be described in more detail with reference to the accompanying drawing in which:
Fig. 1 shows a schematic view of a system for calculating a route to a destination.
Fig. 2 - Fig. 4 show flowcharts depicting the steps of an embodiment of a method for calculating a route to a destination.

### Detailed Description of Preferred Embodiments

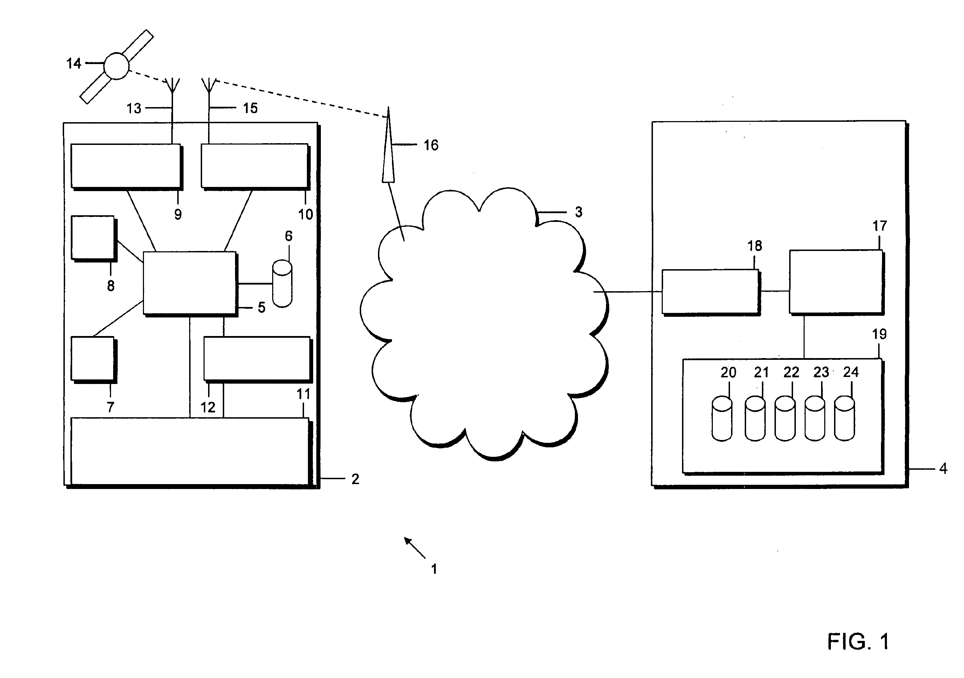

Fig. 1 shows a system 1 for calculating a route to a destination comprising a navigation system 2, a data communication network 3 and an information system 4.

The navigation system 2 comprises a processing unit 5, a memory unit 6, a clock unit 7, a destination unit 8, a positioning unit 9, a communication unit 10, a user interface 11, and an authentication unit 12. The positioning unit 9 is connected to an antenna 13 for receiving signals from a satellite 14 to determined the current position of the navigation system 2. Satellite 14 may be a part of a global positioning system like GPS or any other system providing a positioning information for the positioning unit 9. Furthermore, positioning unit 9 may be adapted to determine the current position of the navigation system by means of a terrestrial positioning system which may be based on a cellular phone system like GSM or the like. The communication unit 10 is connected to an antenna 15 providing a communication with a wireless access base station 16 connected to the data communication network 3. The connection between the communication unit 10 and the wireless access base station 16 may be any kind of wireless communication, for example a communication according to the GSM or UMTS standard or any other cellular or non-cellular wireless communications, for example a wireless local area network (WLAN). The memory unit 6 of the navigation system 2 is used for storing temporary data of the processing unit, configuration data of the navigation system, driver operating characteristics, routing information, and so on, as will be described later. The clock unit 7 provides the processing unit 5 with the current time and date information. The destination unit 8 is used for storing a destination of a route or a sequence of destinations of a route to be reached consecutively and may be also part of the memory unit 6. The user interface 11 may comprise several input and output means to provide a communication between the user of the navigation system and the navigation system 2. Therefore, the user interface 11 may comprise several buttons and switches, a display which may comprise additionally a touch-sensitive surface, and acoustic input and output devices, like a loudspeaker for outputting synthesized speech from the processing unit and a microphone for inputting speech commands to be processed by the processing unit 5. Furthermore, the user interface 11 may comprise input means for authenticating a user in connection with the authentication unit 12. Therefore, the user interface may comprise a fingerprint sensor for an authentication via a fingerprint, an RFID reader for an authentication via an RFID chip of the user or any other authentication means known in the art.

The data communication network 3 provides a communication between the information system 4 and the navigation system 2. As the navigation system 2 is a mobile device, the data communication network provides a wireless communication connection between the data communication network and the navigation system via a base station 16. The information system 4 may be connected to the data communication network 3 via a wireless or a wired connection. The data communication network 3 may comprise several communication networks known in the art, for example the internet, the telephone communication network, cellular wireless networks like GSM or UMTS, and wireless local area networks.

The information system 4 comprises a processing unit 17, a communication unit 18, and a memory unit 19. The memory unit 19 comprises several data bases 20-24 for storing traffic information 20 like congestions, construction sites or traffic forecasts, scheduling information 21 of one or more users of the navigation system 2, address information 22 which may be related to the schedule information 21, information 23 concerning driver operating characteristics of the user of the navigation system 2, and image information 24 of points of interest. Although in Fig. 1 the information 20 to 24 are provided within one memory unit 19, these information may be distributed over several information systems 4 and the processing unit 17 and the communication unit 18 may be adapted to communicate and cooperate with other information systems 4 connected to the data communication network 3 for providing information 20 to 24 in response to a request from the navigation system 2.

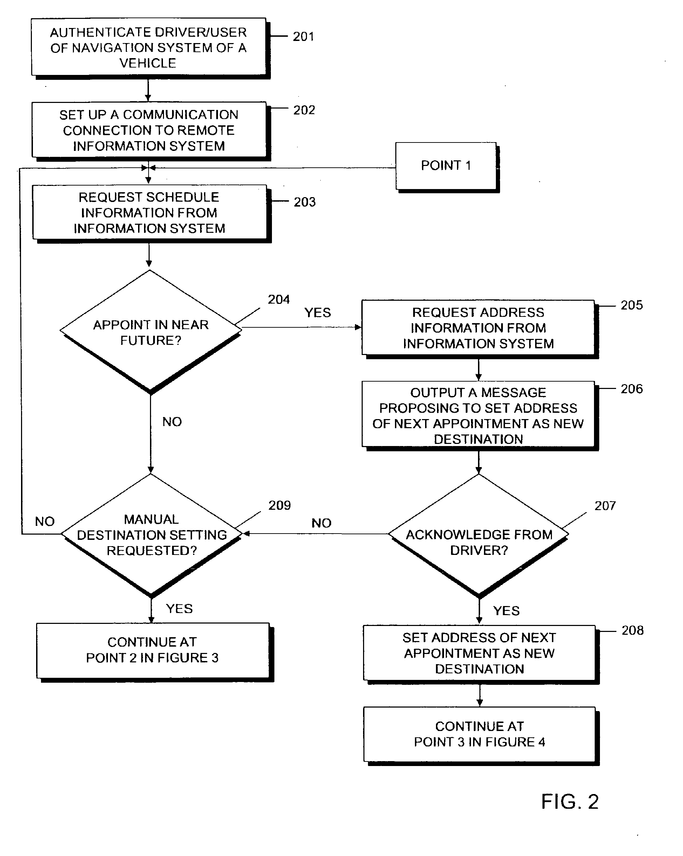

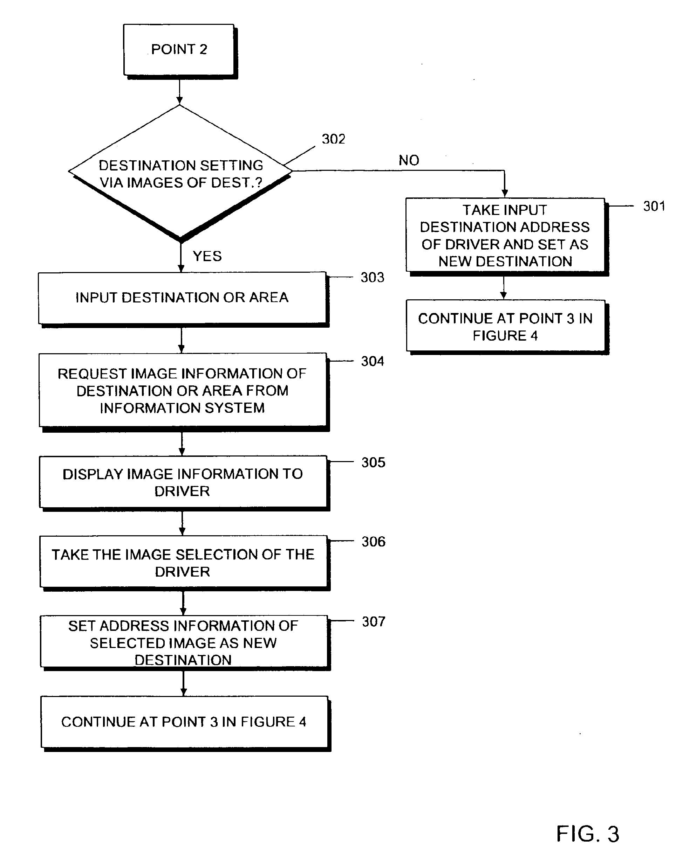

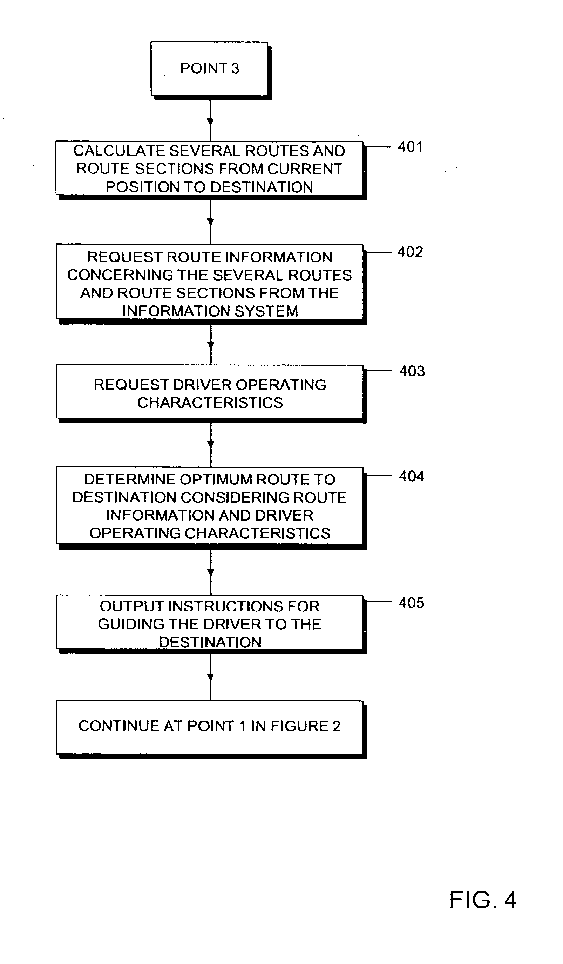

In the following description several embodiments of a method for calculating a route will be described with reference to the system depicted in Fig. 1 and with reference to the flowcharts of Fig. 2 - Fig. 4.

The user of the system 1 enters appointment information into a schedule database of for example a personal computer or a personal digital assistant which is then synchronized with a schedule database 21 of the information system 4 for providing the schedule information to the user any time and anywhere, for example in the office, at home, in a hotel, or on a mobile device during travelling. When the user gets into a car equipped with the navigation system 2, a user identification (step 201) is performed by means of the user interface 11 and the authentication unit 12 of the navigation system 2. Furthermore, the navigation system 2 sets up a communication connection to the remote information system 4 via the data communication network 3 (step 202). After the user authentication the navigation system 2 requests a schedule information 21 of the user from the information system 4 (step 203). When an appointment within the near future is found in the schedule information (step 204), the navigation system retrieves (step 205) an address information relating to the next appointment from the information system 4 and proposes (step 206) to set the found address as the destination for the navigation system by displaying an appropriate text on the user interface 11 or by outputting a corresponding message via loudspeakers connected to the navigation system 2. In case the user acknowledges setting the address information of the next appointment as the destination (step 207), the navigation system sets the address information as the destination in the destination unit 8 (step 208). Alternatively (209), the user may input a destination via the user interface 11 directly by entering a destination address that is then set in the destination unit 8 (step 301). Furthermore, the user can request (step 302) by activating a corresponding function (step 303) in the navigation system 2 images of a destination or images of points of interest within a certain distance to a destination. Upon this request the processing unit 5 requests (step 304) image data from the information system 4 and displays (step 305) the received image data on the display of the user interface 11. The user may browse through the images and may select (step 306) one of the images as a new destination. If a new destination is selected, the address information of the image is set (step 307) as the new destination in the destination unit 8.

When the destination is set in the destination unit 8, the processing unit 5 calculates (step 401) the route from the current position that is determined by the positioning unit 9 to the set destination. For calculating the route, the processing unit 5 requests (step 407) route information 20 from the information system 4 concerning considered route sections from the current position to the destination and determines (step 404) the optimum route to the destination taking into account the requested route information. The route information comprises not only the current traffic situation on the sections of the route, but also information about construction sites on the route and a traffic forecast for each section of the route for the estimated time the user will drive along these sections of the route. The traffic forecast may be based on historical traffic information collected in the past indicating possible congestions due to rush hours or may be based on special event information, for example the beginning or ending of a concert or a sports event which may increase the traffic dramatically. Furthermore, the route information of the information system may additionally comprise a weather forecast for several sections of the route for the estimated time the user will drive along the route sections. The weather forecast information may be used in the navigation system to avoid planning a route using route sections where snow, ice or heavy rain is expected.

Additionally, the navigation system 2 may request (step 403) information 23 about the driver habits or operating characteristics, which means for example how fast the driver is usually driving on different kinds of roads, for example motorways, city roads, or depending on dry and wet road surfaces, and how often the driver usually makes a break during long travels. These driver habits 23 are also stored in the information system 4 and are therefore also available to the processing unit 5 of the navigation system 2 to be taken into account when calculating a route to the destination.

After all the information concerning the route to the destination and the driver are collected and processed, the processing unit finally determines (step 404) the optimum route to the destination. Via a voice guide and/or a visual guide of the user interface 11 the driver of the vehicle is instructed (step 405) to drive along the determined route to the destination, as known in the art.

Furthermore, if the destination was set due to an appointment retrieved from the schedule information 21 of the user, the processing unit 5 estimates the arrival time at the destination and compares the estimated arrival time with the starting time of the appointment at the destination. In case the appointment cannot be reached within the expected time, contact information to a participant of the appointment is retrieved on request of the processing unit 5 of the navigation system 2 by the processing unit 17 of the information system 4 from the schedule information 21 and the address information 22. In this case, the processing unit 5 of the navigation system 2 informs the user that the destination cannot be reached within time and offers the user to automatically negotiate a new starting time of the appointment by adapting the schedule information 21 of the user and the other participants of the appointment or to contact the participant of the appointment by placing a telephone call. In case of a change of the starting time of the appointment a new process of destination setting may be necessary and will be induced as described above.

During travelling along a road, the processing unit 5 monitors the traffic situation as well as the behaviour of the driver. Monitoring the traffic situation means that the processing unit 5 observes the driving speed of the vehicle and compares this driving speed with an expected driving speed for this road. Furthermore, the current driving speed is transferred via the communication unit 10 and the data communication network 3 to the information system 4. The information system 4 can estimate from data received from several vehicles driving along the same road a current traffic situation. For example, if all the vehicles are driving much slower than expected for this type of road, a congestion or a road overload can be assumed. This information is then stored together with a time information as a historical traffic information which can be taken into account by the navigation system in future route calculations. The result of such analysis for weeks or months may be that on a specific road every Thursday afternoon between 2 and 4 o'clock the traffic load is very high. With this information the navigation system 2 can either try to circumnavigate this road when searching for a route to a destination or inform the user about this potential risk and calculate a corresponding delayed arrival time.

Monitoring the driver habits or driver operating characteristics means a monitoring of the driving speed on certain kinds of roads and certain road conditions, for example dry or wet road surface or driving by day or by night. Furthermore, as stated above, also the break intervals of the driver during long travels are monitored and evaluated as driver operating characteristics. By use of these driver operating characteristics the processing unit 5 of the navigation system 2 is able to find the optimum route to a destination that is adapted to these specific driver operating characteristics. Furthermore, taking into account the driver operational characteristics, the estimated arrival time can be estimated very precisely by the processing unit 5.

Furthermore, also the route the driver is driving can be recorded together with a time and date or a day of the week information as the driver habits information. When no destination is set in the destination unit 8, the processing unit 5 analyzes the route the driver is currently driving and tries to match this route with routes that are stored in the driver's habits information by taking into account not only the route but also the time of the day and the day of the week. If a match is found, for example when the driver usually leaves on every Friday the office at 6 p.m. and drives to a golf club, the processing unit assumes that the golf club is the destination and automatically calculates the optimum route to the destination taking into account the route information as described above. In case congestion or a construction site is on the route the driver usually takes to the golf club, the navigation system 2 will automatically circumnavigate the driver to the golf club avoiding using the road with the construction site or the congestion.

The driver operational characteristics may also comprise vehicle settings, for example a seat position, heating settings, and preferred radio stations. In case the vehicle is used by several drivers or a car rental vehicle is used by the driver, this information is available to the navigation system 2 after a driver authentication and may be forwarded from the navigation system 2 to a vehicle control unit controlling the seat positioning, the heating settings, the radio settings and so on.

## Claims

1. A method for calculating a route to a destination for a navigation system, the method comprising the steps of:
- setting up a communication connection between the navigation system (2) and a remote information system (4),
- calculating a route to the destination, wherein for calculating the route to the destination information (20) concerning the route is requested from the information system (4), and the route is determined based on the requested information (20).

2. The method according to claim 1, wherein the setting up of the communication connection is initiated by the navigation system (2) and wherein requesting information from the information system (4) comprises sending a request from the navigation system (2) to the information system (4).

3. The method according to claim 1 or 2, further comprising the steps of:
- setting the destination in the navigation system (2),
- determining the current position of the navigation system (2) by the navigation system (2), and
- calculating a route from the current position to the destination by the navigation system (2).

4. The method according to claim 3, further comprising the steps of:
- identifying a user of the navigation system (2),
- requesting schedule information (21) of the user from the information system (4),
- determining the current time and date,
- determining a next appointment based on the current time and date and the schedule information (21),
- requesting address information (22) of the next appointment from the information system (4), and
- setting the destination in the navigation system (2) based on the address information (22) of the next appointment.

5. The method according to claim 4, further comprising the steps of:
- determining an estimated arrival time at the destination,
- comparing the estimated arrival time with a starting time of the next appointment, and in case, the estimated arrival time exceeds the starting time of the next appointment:
- setting up a communication connection to a person related to said next appointment.

6. The method according to claim 5, wherein setting up a communication connection to a person related to said appointment comprises placing a telephone call to the person related to said appointment.

7. The method according to claim 5 or 6, wherein setting up a communication connection to a person related to said next appointment comprises setting up a data communication connection to a schedule database of said person related to said next appointment and automatically negotiating a new starting time of the appointment and adapting the schedule information (22) in accordance to the negotiation.

8. The method according to any of the preceding claims, wherein information is requested form the information system (4) according to a predetermined protocol, the predetermined protocol comprising an SMS, an MMS, an e-mail or an XML file.

9. The method according to any of the preceding claims, further comprising the step of:
- requesting an acknowledgement from the user of the navigation system (2) for setting the destination.

10. The method according to any of the preceding claims, wherein the information (20) provided on the information system (4) concerning the route comprises at least one of:
- current traffic situation on the route,
- construction sites on the route,
- traffic forecast for the estimated time the route will be driven along,
- weather forecast for the estimated time the route will be driven along.

11. The method according to claim 10, wherein the traffic forecast is based on at least one of:
- historical traffic information relating to the route,
- event information relating to the route, the event information comprising concert events, cultural events and sports events.

12. The method according to any of the preceding claims, wherein the determining of the route is further based on driver operating characteristics (23) comprising usual driving speed and/or break intervals of the user of the navigation system (2).

13. The method according to claim 12, wherein the driver operating characteristics (23) are requested from the information system (4).

14. The method according to claim 12, wherein the driver operating characteristics (23) are stored in the navigation system (4).

15. The method according to any of claims 13-14, further comprising:
- collecting information concerning the driver operating characteristics (23) during driving, and
- storing the collected driver operating characteristics (23) in the navigation system (2) and/or storing the driver operating characteristics (23) in the information system (4).

16. The method according to any of the preceding claims, further comprising:
- collecting current traffic situations (20) during driving, and
- storing the collected current traffic situations (20) in the navigation system (2) and/or storing the current traffic situations (20) in the information system (4) for building up historical traffic information (20) from the current traffic situations (20).

17. The method according to any of the preceding claims, further comprising the steps of:
- requesting from the information system image data (24) of the destination, and
- presenting the image data (24) to a user of the navigation system (2), wherein the user selects the destination by selecting one image from the image data (24).

18. The method according to any of the preceding claims, wherein the information system (4) comprises a server in a data communication network (3) the navigation system (2) is connected to.

19. A system for calculating a route to a destination, the system (1) comprises:
- a navigation system (2) for calculating the route to the destination,
- a remote information system (4) for providing information (20) concerning the route to the destination, and
- a data communication network (3) for providing a communication between the navigation system (2) and the information system (4),
wherein
the navigation system (2) comprises
- a destination unit (8) for storing the destination,
- a communication access unit (10) adapted to provide a communication to the information system (4) via the data communication network (3), and
- a processing unit (5) adapted to calculate a route to the destination, to request information (20) concerning the route from the information system (4) via the communication access unit (10), and to determine the route to the destination based on the requested information (20), and
the information system (4) comprises:
- a communication access unit (18) adapted to provide a communication to the navigation system (2) via the data communication network (3),
- a memory unit (19) for storing information (20) concerning a route, and
- a processing unit (17) adapted to receive from the navigation system (2) a request for information (20) concerning a route, to retrieve information (20) concerning the route in response to the request, and to transmit the retrieved information (20) to the navigation system (2).

20. The system according to claim 19, wherein the processing unit (5) of the navigation system (2) is adapted to initiate a setting up of the communication to the information system (4) and is adapted to send a request for information concerning the route to the information system (4).

21. The system according to claim 19 or 20,
wherein the navigation system (2) further comprises a positioning unit (9) adapted to determine the current position of the navigation system (2), and
wherein the processing unit (5) of the navigation system (2) is further adapted to calculate a route from the current position to the destination.

22. The system according to claim 21, wherein furthermore
- the memory unit (19) of the information system (4) is adapted to store schedule information (21) of a user of the navigation system (2),
- the navigation system (2) comprises an authentication unit (12) adapted to identify a user of the navigation system (2) and a clock unit (7) providing the current time and date,
- the processing unit (5) of the navigation system (2) is adapted to request schedule information (21) of the user from the information system (4), to determine a next appointment based on the current time and date and the schedule information (21), to request address information (22) of the next appointment from the information system (4), and to set the destination in the destination unit (8) of the navigation system (2) based on the address information (22) of the next appointment.

23. The system according to claim 22, wherein
the communication access unit (10) of the navigation system (2) is further adapted to place a telephone call to a person related to said next appointment, and
the processing unit (5) of the navigation system (2) is further adapted to determine an estimated arrival time at the destination, to compare the estimated arrival time with a starting time of the next appointment, and in case, the estimated arrival time exceeds the starting time of the next appointment, to place a telephone call to a person related to said next appointment.

24. The system according to claim 22, wherein
the communication access unit (10) of the navigation system (2) is further adapted to set up a data communication connection to a schedule database of a person related to said next appointment, and
the processing unit (5) of the navigation system (2) is further adapted to determine an estimated arrival time at the destination, to compare the estimated arrival time with a starting time of the next appointment, and in case, the estimated arrival time exceeds the starting time of the next appointment, to automatically negotiate a new starting time of the appointment and adapting the schedule information (21) in accordance to the negotiation.

25. The system according to any of claims 19-24, wherein the communication access unit (10) of the navigation system (2) and the communication access unit (18) of the information system (4) are adapted to exchange information according to a predetermined protocol, the predetermined protocol comprises an SMS, an MMS, an e-mail or an XML file.

26. The system according to any of claims 19-25, wherein the navigation system (2) further comprises a user interface (11), and wherein the processing unit (5) of the navigation system (2) is adapted to request via the user interface (11) an acknowledgement from the user of the navigation system (2) for setting the destination.

27. The system according to any of claims 19-26, wherein the information (20) provided on the information system (4) concerning the route comprises at least one of:
- current traffic situation on the route,
- construction sites on the route,
- traffic forecast for the estimated time the route will be driven along,
- weather forecast for the estimated time the route will be driven along.

28. The system according to claim 27, wherein the traffic forecast is based on at least one of:
- historical traffic information relating to the route,
- event information relating to the route, the event information comprising concert events, cultural events and sports events.

29. The system according to any of claims 19-28, wherein the processing unit (5) of the navigation system (2) is further adapted to determine the route based on driver operating characteristics (23) comprising usual driving speed and/or break intervals of the user of the navigation system (2).

30. The system according to claim 29, wherein the processing unit (5) of the navigation system (2) is further adapted to request the driver operating characteristics (23) from the information system (4).

31. The system according to claim 29, wherein the navigation system (2) further comprises a memory unit (6) for storing the driver operating characteristics (23).

32. The system according to any of claims 29-31, wherein the processing unit (5) of the navigation system (2) is further adapted to collect information (23) concerning driver operating characteristics during driving, and to store the collected driver operating characteristics (23) in a memory unit (6) of the navigation system (2) and/or the memory unit (19) of the information system (4).

33. The system according to any of claims 19-32, wherein the processing unit (5) of the navigation system (2) is further adapted to collect current traffic situations during driving, and to store the collected current traffic situations in the navigation system and/or storing the current traffic situations in the memory unit (19) of the information system (4) for building up historical traffic information (20) from the current traffic situations.

34. The system according to any of claims 19-33, wherein the processing unit (5) of the navigation system (2) is further adapted to request from the information system (4) image data (24) of the destination, to presenting the image data (24) to a user of the navigation system (2) via a user interface (11) of the navigation system (2), and to set a destination in the destination unit (8) of the navigation system (2) based on a user selection input via the user interface (11) selecting the destination by one image from the image data (24).

35. The method according to any of claims 19-34, wherein the information system (4) comprises a server in a data communication network (3) the navigation system (2) is connected to.
